Europäisches Patentamt

European Patent Office

Office européen des brevets

(19)

(11) Numéro de publication : **0 407 244 B1**

## (12) FASCICULE DE BREVET EUROPEEN

(45) Date de publication du fascicule du brevet :
31.08.94 Bulletin 94/35

(51) Int. Cl.⁵ : **G11B 5/31**

(21) Numéro de dépôt : **90401677.1**

(22) Date de dépôt : **15.06.90**

(54) **Procédé de fabrication de têtes magnétiques planaires par alvéolage d'une plaquette non magnétique, et têtes magnétiques obtenues par un tel procédé.**

(30) Priorité : **04.07.89 FR 8908962**

(43) Date de publication de la demande :
**09.01.91 Bulletin 91/02**

(45) Mention de la délivrance du brevet :
**31.08.94 Bulletin 94/35**

(84) Etats contractants désignés :
**DE GB IT NL**

(56) Documents cités :
**EP-A- 0 262 028**
**FR-A- 2 605 783**
**PATENT ABSTRACTS OF JAPAN vol. 12, no. 429 (P-785)(3276) 14 novembre 1988, & JP-A-63 160006 (ALPS ELECTRIC CO LTD) 02 juillet 1988,**

(73) Titulaire : **THOMSON-CSF**
**173, Boulevard Haussmann**
**F-75008 Paris (FR)**

(72) Inventeur : **Meunier, Paul-Louis**
**THOMSON-CSF,**
**SCPI,**
**Cédex 67**
**F-92045 Paris la Défense (FR)**
Inventeur : **Coutellier, Jean-Marc**
**THOMSON-CSF,**
**SCPI,**
**Cédex 67**
**F-92045 Paris la Défense (FR)**
Inventeur : **Lehureau, Jean-Claude**
**THOMSON-CSF,**
**SCPI,**
**Cédex 67**
**F-92045 Paris la Défense (FR)**

(74) Mandataire : **Guérin, Michel et al**
**THOMSON-CSF**
**SCPI**
**B.P. 329**
**50, rue Jean-Pierre Timbaud**
**F-92402 Courbevoie Cédex (FR)**

EP 0 407 244 B1

## Description

Le domaine de l'invention est celui de la fabrication simultanée d'une pluralité de têtes planaires magnétiques sur une plaquette ou une galette en matériau non magnétique destinée à être découpée pour séparer chaque tête.

Les têtes planaires magnétiques sont utilisées notamment pour l'écriture ou la lecture de bandes magnétiques du type utilisées dans les magnétophones, les magnétoscopes et autres.

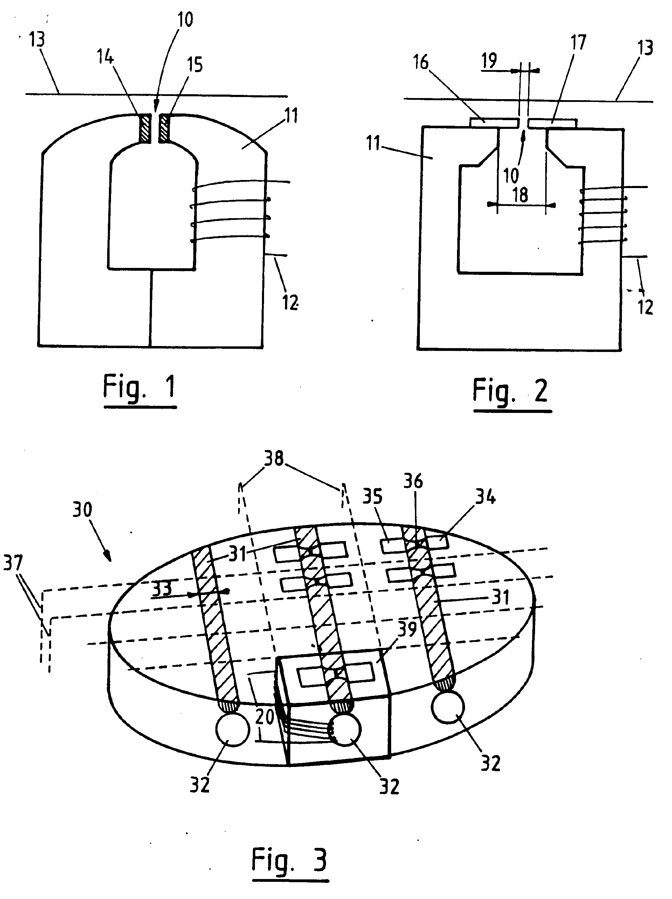

On connaît une première structure de têtes magnétiques consistant à dégager un entrefer 10 dans un substrat magnétique 11 à bobinage 12 (Fig. 1), pour lire ou écrire sur une bande magnétique mobile 13.

Dans un mode de réalisation de ce type de structure permettant de travailler avec des bandes magnétiques à forte coërcivité, on a rapporté de façon connue, des couches magnétiques 14, 15 à forte aimantation à saturation (têtes MIG) sur les faces opposées de l'entrefer 10. Cette technologie présente toutefois l'inconvénient d'être d'une mise en oeuvre complexe, et de ne pas être totalement satisfaisante d'un point de vue industriel du fait que le plan de dépôt des couches est perpendiculaire au plan de défilement des pistes magnétiques 13.

On a alors développé des têtes magnétiques à structure planaire telles que représentées en figure 2. Selon cette nouvelle conception connue, on rapporte des couches minces 16, 17 en matériau magnétique, au niveau de l'entrefer 10, dans un plan parallèle au plan de circulation de la piste magnétique 13. Le matériau constitutif des couches minces 16, 17 est choisi de façon à engendrer un champ magnétique plus intense que le matériau de substrat magnétique 13 à forte coercivité. Cette technologie correspond à un fonctionnement différent des têtes, qui présente notamment des propriétés intéressantes en haute fréquence. Une application avantageuse concerne les têtes tournantes, permettant de travailler à des forts débits (plusieurs dizaines de Mbits/s).

Dans ce type de têtes planaires magnétiques, on distingue d'une part, la macro-ouverture 18 de l'entrefer (macrogap), par exemple de l'ordre de 200 à 300 μm. Ces dimensions sont données à titre illustratif et non limitatif.

L'invention concerne un procédé de réalisation de têtes planaires de ce type.

On connaît un procédé collectif de réalisation de têtes planaires, comme illustré en figure 3. Selon ce procédé, on utilise une galette 30 typique obtenue par découpage dans un bloc de ferrite de section transversale circulaire. La galette 30 comporte sur sa face active une pluralité de barettes 31 en matériau non magnétique, parallèles les unes aux autres. Ces barettes non magnétiques sont situées au-dessus d'une cavité 32. La largeur 33 de chaque barette 31 correspond à la macro-ouverture 18 de la tête planaire schématisée en figure 2. Pour la réalisation des micro-ouvertures, on dépose une couche mince en matériau magnétique à coefficient de saturation élevé. On délimite enfin des "papillons" 34, 35 dans le dépôt en couches minces, par opérations de masquage et d'usinage ionique. Les micro-ouvertures 36 sont enfin délimitées entre les deux ailes 34, 35 des dépôts "papillon". Il est enfin possible de découper la galette 30 suivant les deux jeux perpendiculaires 37, 38 de plans parallèles, de façon à individualiser chaque tête planaire 39.

On connaît plusieurs modes de mise en oeuvre de ce procédé, et notamment celui décrit dans le brevet français 2 641 111 au nom du même déposant. Une caractéristique de ce type de tête planaire connu est qu'elle est réalisée dans une galette de matériau magnétique 30.

L'invention a pour objectif de fournir un procédé de fabrication de têtes planaires dans une galette de matériau non magnétique, tel que le silicium, ou encore $Al_2O_3TiC$, à titre non limitatif.

On connaît un procédé de ce type, tel que décrit dans le brevet français 2 605 783. Toutefois, la galette à matériau non magnétique utilisée dans ce document antérieur présente l'inconvénient d'opposer, du fait de son épaisseur, un obstacle à la traversée du rayonnement magnétique entre les couches minces supérieures, et les noyaux d'entrefer inférieurs. L'invention a pour objectif de résoudre cet inconvénient.

Plus précisément, l'invention concerne un procédé de fabrication de têtes magnétiques à structure planaire, notamment pour l'encodage et la lecture de bandes magnétiques, chacune desdites têtes magnétiques étant du type comprenant une micro-ouverture formée entre deux pôles magnétiques, en regard d'un entrefer défini entre deux noyaux de ferrite bobinés. Ce procédé consiste à déposer lesdits pôles magnétiques en couche mince sur une première face d'une plaquette en matériau non magnétique, et à dégager dans la face opposée de ladite plaquette au moins une alvéole de logement desdits noyaux bobinés, de façon à obtenir un espacement calibré pour une jonction entre la partie supérieure de chacun desdits noyaux bobinés et lesdits pôles magnétiques en couche mince.

On peut distinguer deux modes de réalisation principaux de l'invention, suivant que l'opération d'alvéolage sert à dégager, dans la plaquette en matériau non magnétique, des logements de réception de noyaux bobinés rapportés ultérieurement, ou qu'elle permette de dégager dans la masse même de la plaquette non magnétique des noyaux destinés à être revêtus de matériau magnétique puis bobinés.

Selon le premier mode de réalisation, lesdits noyaux sont avantageusement formés au moins par paire,

2

sur un substrat commun, et bobinés avant insertion collective dans lesdites alvéoles de logement.

Dans ce cas, le substrat commun de formation des noyaux bobinés est soit constitué par une contre-pièce monobloc en matériau magnétique, tel que le ferrite, soit par au moins un module en matériau magnétique comportant au moins une paire de noyaux, chaque module étant inséré après bobinage des noyaux entre ladite plaquette en matériau non magnétique et une contre pièce de maintien également en matériau non magnétique.

Selon une troisième variante de ce premier mode de réalisation, le processus de formation des noyaux consiste à usiner ladite partie non magnétique de façon à y former des plots dans ladite seconde face, puis à déposer un matériau magnétique sur au moins une partie de la surface desdits plots.

Dans le second mode de réalisation, on dégage avantageusement chacune desdites alvéoles de logement des noyaux bobinés sensiblement au niveau d'une micro-ouverture formée entre deux pôles magnétiques en couche mince, et on dépose sur deux portions symétriques des flancs de ladite alvéole une couche de matériau magnétique, pour former ladite paire de noyaux associés à ladite micro ouverture.

Préférentiellement, lesdites alvéoles sont réalisées par dégagement de noyaux dans ladite seconde face de la plaquette en matériau non magnétique, et on forme les bobinages autour desdits noyaux à flanc revêtus au moins partiellement de matériau magnétique.

Selon une caractéristique de ce second mode de réalisation de l'invention, le processus de dépôt d'une couche de matériau magnétique, sur les deux portions symétriques des flancs de ladite alvéole, comporte les étapes suivantes :

- on dépose une couche d'épargne dans le fond de ladite alvéole ;
- on dépose ledit matériau magnétique sur lesdites portions de flanc symétriques d'alvéole ;
- on élimine ladite couche d'épargne ;
- on brise le cas échéant le pont formé entre lesdits dépôts symétriques de matériau magnétique sur les deux portions de flanc symétriques de l'alvéole.

Quelque soit le mode de réalisation, l'invention prévoit la possibilité d'immerger partiellement lesdits plots en couche mince à micro ouverture, dans des cavités ménagées dans ladite première face de la plaquette en matériau non magnétique.

La présente invention est définie par les revendications ci-jointes.

D'autres caractéristiques et avantages de l'invention apparaîtront à la lecture de la description suivante de quelques exemples préférentiels des modes de réalisation de l'invention, donnés à titre illustratif et non limitatif, et des dessins annexés dans lesquels :

- La figure 1 schématise la structure d'une tête magnétique connue classique ;
- La figure 2 schématise la structure d'une tête magnétique planaire, à couches minces et micro-ouverture ;
- La figure 3 représente une galette de fabrication collective de têtes magnétiques planaires, selon un procédé connu ;
- Les figures 4 et 5 représentent deux variantes d'alvéolage d'une plaquette en matériau non magnétique pour la fabrication collective de têtes magnétiques planaires suivant l'invention ;
- La figure 6 est un schéma électrique équivalent d'accompagnement du tableau de calcul de l'épaisseur de l'espacement calibré entre les noyaux magnétiques bobinés et les pôles magnétiques en couches minces, dans une tête planaire magnétique suivant l'invention ;
- La figure 7 est un schéma d'accompagnement du même tableau de calcul, précisant la signification des notations utilisées ;
- La figure 8 est un schéma illustrant le premier mode de mise en oeuvre du procédé de l'invention, dans le cas d'une contre-pièce usinée en ferrite, coopérant avec le substrat alvéolé non magnétique de la figure 4 ;
- Les figures 9 et 10 illustrent une seconde variante du premier mode de mise en oeuvre de l'invention dans lequel la contre-pièce coopérant avec la galette non magnétique alvéolée est constituée par un substrat non magnétique usiné, revêtu de matériau magnétique puis bobiné ;
- La figure 11 illustre une troisième variante du premier mode de mise en oeuvre de l'invention dans lequel les noyaux magnétiques sont appariés sous forme de modules insérés entre la galette alvéolée, et une contre-pièce de matériau non magnétique ;
- Les figures 12 et 13 illustrent la variante de l'invention selon laquelle les pôles magnétiques en couches minces sont immergés dans la galette en matériau non magnétique ;
- Les figures 14 et 15 schématisent le second mode de mise en oeuvre de l'invention, selon la variante d'alvéolage de la figure 5.

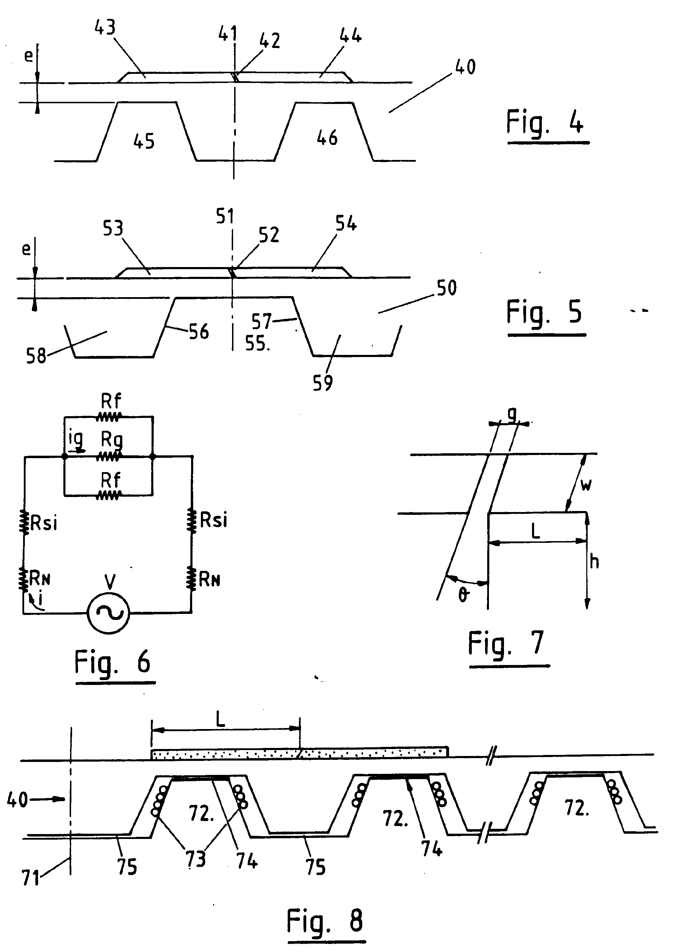

Le procédé de l'invention présente deux modes de réalisation principaux, schématisés sur les figures 4 et 5 respectivement.

Selon le premier mode de réalisation, le substrat en matériau non magnétique 40, préférentiellement en Si, ou en Al$_2$O$_3$TiC, est alvéolé de façon à encadrer par deux alvéoles sensiblement symmmétriques 45,46, le plan 41 de la micro-ouverture 42 ménagée entre les deux pôles magnétiques en couches minces 43, 44.

L'opération d'alvéolage s'effectue par exemple par usinage chimique de la galette 40 en matériau non magnétique. Le cas échéant, les deux alvéoles 45, 46 peuvent ne constituer qu'une grande alvéole unique. Dans ce cas, cette dernière doit être suffisamment large pour pouvoir recevoir les noyaux bobinés rapportés, du type de ceux représentés en figure 8, 9, 10 et 11.

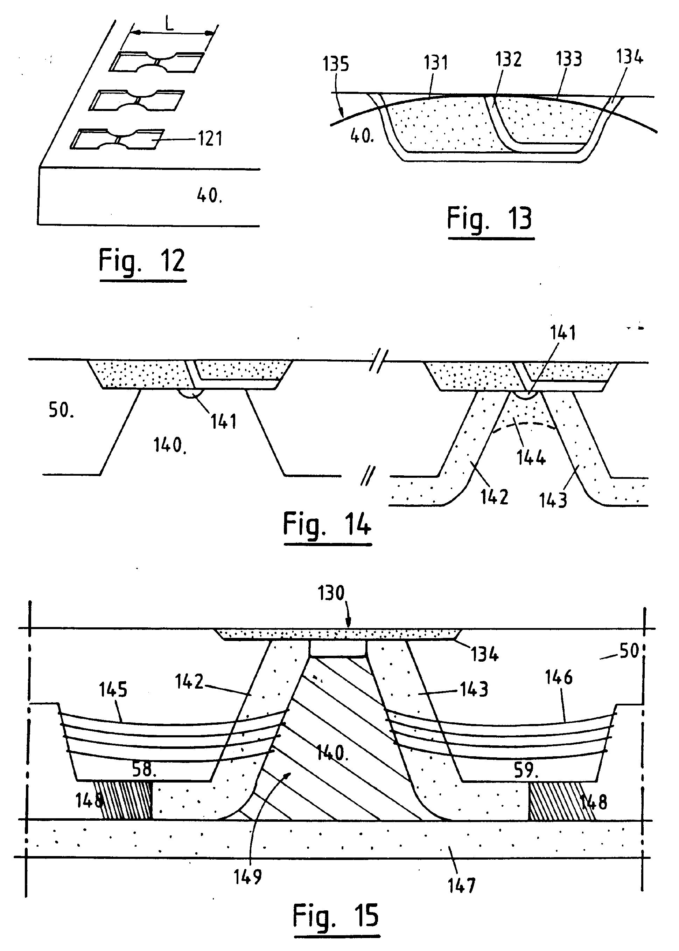

Dans un second mode d'alvéolage, dans le cadre de l'invention, une alvéole unique 55 est ménagée dans la galette 50 en matériau non magnétique, sensiblement au niveau du plan 52 de la micro-coupure 51 dégagée entre deux pôles magnétiques en couches minces 53, 54. Dans ce second mode de réalisation, les pôles magnétiques peuvent alors avantageusement être appliqués directement sur les flancs 56, 57 de l'alvéole unique 55, comme illustré en figures 14 et 15. Avantageusement, ces alvéoles sont en fait réalisées en usinant des plots saillants 58 et 59, de section circulaire, quadrangulaire ou autres, dans la seconde face (inférieure) de la galette 50 en matériau non magnétique.

L'objectif de l'opération d'alvéolage est de minimiser l'épaisseur e séparant le fond des alvéoles 45,46,55, et les pôles magnétiques en couches minces 43, 44 ; 53, 54. Le cas échéant, et comme illustré plus loin, il est également possible d'annuler cette épaisseur.

La note de calcul présentée en TABLE I, en accompagnement des figures 6 et 7, permet de montrer qu'une épaisseur e maximale de 5 microns est acceptable.

Dans le premier mode de mise en oeuvre représenté en figure 8, la plaquette alvéolée 40 coopère avec une contre-pièce 71 en matériau magnétique, par exemple le ferrite. Dans cette contre-pièce 71, ont été formés, par exemple par usinage, des plots 72. Ces plots jouent le rôle de noyaux de ferrite. Après enroulement d'un bobinage 73 autour de chaque plot, la contre-pièce 71 est rapportée sur la deuxième face (inférieure) de la galette 40, de façon à faire pénétrer chaque plot bobiné 72 à l'intérieur d'une alvéole.

La contre-pièce 71 est solidarisée par tout moyen à la galette 40, par exemple par collage au moyen d'une colle de type CERAVAC (marque), ou toute autre colle. Les zones de collage sont par exemple disposées dans le fond 74 des alvéoles, ou encore entre les plots 72 de la contre-pièce en ferrite 71, suivant que le plan d'appui entre les pièces 40 et 71 se trouve à l'un ou l'autre niveau. A titre indicatif, l'ouverture à la base de chacune des alvéoles peut être de l'ordre de 200 microns, pour une longueur L de chacun des pôles en couche mince de l'ordre de 350 à 500 microns.

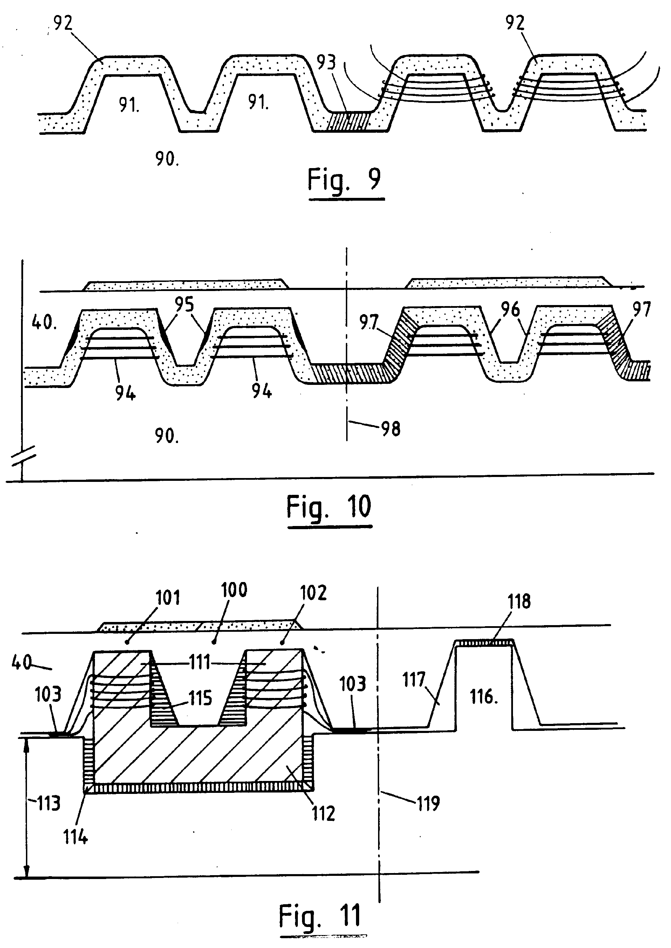

Dans le mode de mise en oeuvre illustré en figures 9 et 10, la contre-pièce 90 est constituée en matériau non magnétique, par exemple en silicium, en verre, ou en AL$_2$O$_3$TiC (ces exemples de matériaux sont donnés à titre non limitatif).

La contre-pièce 90 est par exemple usinée chimiquement, de façon à présenter des pôles 91, selon une géométrie correspondant à l'alvéolage de la galette 40. Les pôles sont ensuite revêtus par un dépôt de matériau magnétique 92, par exemple de Sendust feuilleté ou non. Un masquage préalable, ou un abrasage ultérieur des zones 93 entre chaque paire de pôles permet de briser la continuité magnétique d'une tête planaire à la tête adjacente.

Chacun des pôles revêtu 91, 92 est bobiné 94, postérieurement.

Comme représenté en figure 10, la contre-pièce munie des pôles à revêtement magnétique bobinés est ensuite rapportée sur la seconde face (inférieure) de la galette 40. Des zones de collage 95, peuvent être prévues pour la solidarisation des pièces 90 et 40.

Le cas échéant, seule une portion 96 des pôles de la contre-pièce 90 peut être revêtue de matériau magnétique, la portion restante 97 étant laissée nue, ou revêtue de matériau non magnétique.

A titre indicatif, la hauteur des pôles 91 peut être de l'ordre de 300 à 350 microns. Le dépôt de Sendust s'effectue avantageusement sur une épaisseur de 20 à 50 microns environ. La largeur des pôles revêtus est par exemple de l'ordre de 250 microns, qui correspond approximativement à la largeur des fonds d'alvéole de la plaquette 40.

Les zones de transition entre deux têtes planaires adjacentes s'étendent par exemple sur quelques millimètres. L'individualisation des têtes se fait avantageusement par découpage suivant un plan de sciage 98.

Dans le mode de mise en oeuvre représenté en figure 11, les noyaux de ferrite 111 sont jumelés par paires sous forme de modules 112. Chaque module 112 est encastré entre d'une part la plaquette alvéolée 40 et d'autre part une contre-pièce 113 pourvue de logements 114 d'encastrement de la partie inférieure des modules 112 de noyaux magnétiques 111.

La solidarisation de l'ensemble s'effectue avantageusement par collage, par exemple à un emplacement 115 de liaison des modules 112 et de la plaquette alvéolée 40, et/ou dans le fonds du logement d'encastrement 114.

Avantageusement, la contre-pièce 113 en matériau non magnétique est pourvue de plots additionnels 116, dégagés dans la masse non magnétique elle-même, et destinés à venir s'encastrer dans une alvéole spécifique de solidarisation 117. Le fond de l'alvéole constitue alors une zone de collage 118 avec le plot 116. Ces plots 116 peuvent servir spécifiquement à l'opération de fabrication collective des têtes planaires, puis être éliminés lors de l'opération d'individualisation de chaque tête planaire, par exemple par sciage le long du plan de découpe 119.

A titre indicatif, la hauteur du module 112 peut être de l'ordre de 200 à 300 microns. La hauteur Z de la contre-pièce en matériau magnétique est par exemple de l'ordre de 500 microns à 2 millimètres. Cette pièce peut être réalisée en silicium, en $Al_2O_3TiC$ ou autres.

On notera que la partie intermédiaire 100 entre les alvéoles, ainsi que le cas échéant l'une et/ou l'autre des couches solides 101, 102 de séparation des pôles magnétiques d'avec le module de noyau 112, peuvent être éliminées. Ils sont donc remplacés par le milieu ambiant, à savoir généralement de l'air. Dans ce cas, la surface d'appui de l'ensemble est constituée par les plans 103 de liaison des pièces 40 et 113, dans lesquels ont éventuellement été ménagés des canaux de passage des fils de bobinage.

Les figures 12 et 13 sont relatives à une variante avantageuse de l'invention dans laquelle les pôles magnétiques en couches minces, et à micro-ouverture, sont immergés dans la première face (supérieure) de la plaquette en matériau non magnétique.

L'immersion des pôles présente plusieurs avantages, à savoir notamment la résistance à l'usure, ainsi que la suppression de l'usinage collectif des pôles en fin de procédé de fabrication.

L'immersion s'effectue avantageusement après creusement de la plaquette 40 de silicium, par exemple par usinage chimique, avec masquage approprié de résine. La profondeur d'immersion est par exemple de l'ordre de 2 à 3 microns, pour une longueur L des papillons 121 de l'ordre de 600 microns par exemple.

Comme représenté en figure 13, les pôles sont ensuite déposés sous forme de couches successives de Sendust 131, de matériau isolant tels que $Al_2O_3$ 132 et à nouveau de Sendust 133. L'épaisseur de la couche intermédiaire 132 en $Al_2O_3$ est par exemple de l'ordre de 0,2 microns.

Le cas échéant, une couche préliminaire 134 peut être déposée avant les trois couches 131, 132, 133. Cette couche préliminaire est avantageusement une couche d'arrêt à l'usinage chimique du substrat de la plaquette en silicium 40, utilisable par exemple dans le procédé des figures 14 et 15 décrit plus loin.

Avant ou après individualisation des têtes planaires, la première face (supérieure) de la galette de silicium est ensuite avantageusement polie de façon à présenter à un profil arrondi 135, de bonne résistance à l'usure.

On constate donc que la structure immergée des pôles présente l'avantage de permettre la réalisation aisée d'un arrondi, suivie le cas échéant du dépôt d'une couche de protection. A titre d'exemple, si les pôles de la tête planaire présentent une épaisseur de l'ordre de 2 microns, et une longueur de 200 microns, le rayon de courbure qui épousera la corde idéale sera de 20 millimètres au maximum. De cette façon, les pôles restent toujours en continuité géométrique du profil de la tête, quelque soit le degré d'usure, puisque la tête ne présente plus de bord d'attaque spécifique.

Le mode de mise en oeuvre représenté en figures 14 et 15, correspond à l'utilisation de la structure d'alvéolage illustrée en figure 5.

Dans ce mode de réalisation, une alvéole unique 140 est dégagée dans la face inférieure de la plaquette 50 en matériau non magnétique. Cette alvéole 140 est par exemple réalisée jusqu'à atteindre la couche d'arrêt chimique 134 mentionnée à propos de la figure 13.

Avantageusement, une couche localisée 141 d'épargne est déposée dans le fond de l'alvéole 140. Cette couche 141 est par exemple réalisée en résine, en $SiO_2$, en $Al_2O_3$, en Céravac ou autres. Une couche 142, 143 de matériau magnétique est ensuite sélectivement déposée, de façon sensiblement symétrique, sur les deux flancs opposés de l'alvéole 140. Ces deux dépôts 142, 143, servent à constituer les noyaux de chaque tête magnétique, qui seront ensuite munis d'un bobinage 145, 146 (Fig.15).

Le cas échéant, lorsque l'étape de dépôt des couches 142, 143, conduit à la constitution d'un pont de liaison 144 de matériau magnétique, le pont 144 est brisé et éliminé par attaque sélective de la couche d'épargne 141, puis action mécanique de brisure.

Le matériau magnétique déposé sur les couches 142, 143 est avantageusement du Sendust, feuilleté ou non.

Comme représentés en figure 15, les bobinages 145, 146, sont par exemple passés autour des plots 58, 59, dont les flancs en vis-à-vis sont revêtus des couches de Sendust 142, 143.

On note qu'il existe une quasi jonction entre les noyaux magnétiques 142, 143, et les pôles 130 en couches minces, séparés par la seule couche d'arrêt chimique 134.

La solidarisation de l'ensemble s'effectue par exemple en rapportant une pièce de liaison 147 en matériau magnétique, assurant la jonction magnétique des deux pôles 142, 143 sur la seconde face (inférieure) de la plaquette 50 en matériau non magnétique. La solidarisation s'effectue par exemple par collage dans des zones de liaison 148 de la plaque magnétique 147 avec les plots 58, 59, dégagés dans la plaquette en matériau non magnétique 50.

Avantageusement, l'alvéole 140 est préalablement remplie d'un enrobage, par exemple en Céravac.

A titre indicatif, on pourra noter que l'épaisseur des couches de matériau magnétique 142, 143, déposée sur les flancs de l'alvéole 140 peut être de l'ordre de 20 à 50 microns. Une distance de séparation de l'ordre de 3 à 5 millimètres peut être prévue entre chaque alvéole 140.

## TABLE I

## CALCUL DE L'EPAISSEUR "e" MAXIMALE ADMISSIBLE

Si l'on pose, en relation avec les Fig. 6 et 7 :

- $R_f$ : résistance équivalente de fuite des pôles en couches minces

- $R_g$ : résistance équivalente de la micro-ouverture

- $i_g$ : courant équivalent traversant la micro-ouverture

- $R_{si}$ : résistance équivalente de l'épaisseur de Si non usinée

- $R_N$ : résistance équivalente de chaque noyau de ferrite

- g : largeur de la micro-ouverture

- $i_t$ : courant total

- w : largeur des pôles (longueur de la micro-ouverture)

- h : profondeur de la micro-ouverture

- L : longueur des pôles en couches minces

- $\theta$ : angle d'ouverture de la micro-ouverture

- e : épaisseur de la galette de Si entre chaque noyau et le pôle correspondant

- S : surface en regard pôle ferrite / pôle sendust

on a

$$i_g = \frac{R_F}{R_F + 2R_g} i_t$$

d'où l'efficacité : $\eta = \dfrac{R_g\, i_g}{\left(2R_N + 2R_{si} + \dfrac{R_F\, R_g}{R_F + 2R_g}\right) i_t}$

ce qui correspond à :

$$\eta = \frac{R_g\, R_F}{2(R_F + 2R_g)(R_N + R_{si}) + R_F\, R_g}$$

Dans le cas où :

$\bullet\ R_F >> R_g \quad \eta = \dfrac{R_g}{2(R_N + R_{si}) + R_g}$

Pour obtenir $\eta$ maximum, il faut $2R_{si} << R_g$

or $R_g \approx g / (w.h)$    et $R_{si} = e / S$

avec S : surface en regard des pôles . $(S = 4.10^4 \ \mu m^2)$

si    $g = 0,2 \ \mu m$ , $h = 2 \ \mu m$ , $w = 20 \ \mu m$

alors  $e << 100 \ \mu m$   c'est-à-dire $e \approx 10 \ \mu m$ en considérant un ordre de grandeur.

Dans le cas où :

$. R_F \approx R_g$

alors  $\eta = \dfrac{R_g}{R_g + 6(R_N + R_{si})}$

la condition $6 \ R_{si} << R_g$ aboutit à $e << 30$

soit $e \approx 3 \ \mu m$

On a    $R_g = g / (wh) = 5.10^{-3}$

$$R_F = \dfrac{\theta}{\mu_0 W_f \ Ln \ \dfrac{(1+2Lsin\theta/2)}{g}}$$

En décomposant le papillon fourni par les deux pôles en couches minces en deux parties, sous forme de deux carrés $R_1$ et $R_2$ de 100 $\mu m$ et de 200 $\mu m$ de côté respectivement.

On aboutit à $R_F = R_1 + R_2 = 4.10^{-3} + 1,6.10^{-3} = 5,6.10^{-3}$

d'où $R_F \approx R_g$

On se situe donc dans le cas $R_F \approx R_g$ et e de l'ordre de quelques microns.

Un compromis technologique de 5 $\mu m$ est donc acceptable

**Revendications**

1. Procédé de fabrication de têtes magnétiques à structure planaire, notamment pour l'encodage et la lecture de bandes magnétiques, chacune desdites têtes magnétiques étant du type comprenant une micro-ouverture formée entre deux pôles magnétiques, en regard d'un entrefer défini entre deux noyaux de ferrite bobinés, consistant
à déposer lesdits pôles magnétiques en couche mince sur une première face d'une plaquette (40,50) en matériau non magnétique, procédé caractérisé en ce qu'il consiste à dégager dans la face opposée de ladite plaquette au moins une alvéole (45,46 ; 55) de logement desdits noyaux bobinés (72 ; 91 ; 111 ; 142,143), de façon à obtenir un espacement calibré (e) pour une jonction entre la partie supérieure de chacun desdits noyaux bobinés et lesdits pôles magnétiques en couche mince.

2. Procédé selon la revendication 1 caractérisé en ce que lesdits noyaux bobinés sont formés au moins par paire, sur un substrat commun (71 ; 90 ; 112), et bobinés avant insertion collective dans lesdites alvéoles de logement.

3. Procédé selon la revendication 2 caractérisé en ce que le substrat commun de formation des noyaux bobinés est constitué par une contre-pièce monobloc (71) en matériau magnétique, tel que le ferrite.

4. Procédé selon la revendication 2 caractérisé en ce que ledit substrat commun de formation des noyaux bobinés est constitué par au moins un module (112) en matériau magnétique comportant au moins une paire de noyaux (111), chaque module (112) étant inséré après bobinage des noyaux entre ladite plaquette en matériau non magnétique et une contre-pièce (113) de maintien également en matériau non magnétique.

5. Procédé selon la revendication 2 caractérisé en ce que le processus de formation des noyaux consiste à usiner un substrat commun non magnétique (90) de façon à y former des plots (91), puis à déposer un matériau magnétique (92) sur au moins une partie de la surface desdits plots (91).

6. Procédé selon l'une quelconque des revendications 2 à 5 caractérisé en ce que lesdites alvéoles (45,46 ; 55) sont réalisées non débouchantes, ledit espacement calibré (e) étant effectué par mise en butée dudit substrat commun dans le fond des alvéoles.

7. Procédé selon l'une quelconque des revendications 2 à 5 caractérisé en ce que lesdites alvéoles sont réalisées indifféremment débouchantes ou non débouchantes, ledit espacement calibré étant obtenu par mise en butée dudit substrat commun sur un plan d'appui distinct du fond des alvéoles.

8. Procédé selon la revendication 1 caractérisé en ce qu'on dégage chacune desdites alvéoles (55 ; 140) de logement des noyaux bobinés (142,143) sensiblement au niveau d'une micro-ouverture formée entre deux pôles magnétiques en couche mince, et en ce qu'on dépose sur deux portions symétriques des flancs de ladite alvéole une couche de matériau magnétique (142,143), pour former ladite paire de noyaux associés à ladite micro ouverture.

9. Procédé selon la revendication 8 caractérisé en ce qu'on réalise le bobinage (145,146) desdits noyaux (142,143) autour desdites portions de flanc à revêtement magnétique, après découpe et individualisation de chaque tête magnétique dans la plaquette.

10. Procédé selon la revendication 8 caractérisé en ce que lesdites alvéoles (140) sont réalisées par dégagement de pôles (58,59) dans ladite seconde face de la plaquette (50) en matériau non magnétique, et en ce qu'on forme les bobinages (145,146) autour desdits pôles (58,59) à flanc revêtus au moins partiellement de matériau magnétique.

11. Procédé selon l'une quelconque des revendications 8 à 10 caractérisé en ce que le processus de dépôt d'une couche de matériau magnétique, sur deux portions symétriques des flancs de ladite alvéole (140), comporte les étapes suivantes :
    - on dépose une couche d'épargne (141) dans le fond de ladite alvéole (140);
    - on dépose ledit matériau magnétique (142,143) sur lesdites portions de flanc symétriques d'alvéole (140);
    - on élimine ladite couche d'épargne (141);
    - on brise le cas échéant le pont (144) formé entre lesdits dépôts symétriques de matériau magnétique (142,143) sur les deux portions de flanc symétriques de l'alvéole (140).

12. Procédé selon l'une quelconque des revendications 9 et 10 caractérisé en ce que ladite alvéole (140) est remplie d'un matériau d'enrobage (149) après l'opération de bobinage.

13. Procédé selon l'une quelconque des revendications 8 à 12 caractérisé en ce qu'on réalise une jonction magnétique (147) desdits dépôts (142,143) de couches magnétiques symétriques.

14. Procédé selon l'une quelconque des revendications 1 à 13 caractérisé en ce qu'on immerge au moins partiellement lesdits pôles en couche mince à micro ouverture, dans des cavités (121) ménagées dans ladite première face de la plaquette (40 ; 50) en matériau non magnétique.

15. Procédé selon la revendication 14 caractérisé en ce que lesdits pôles en couche mince à micro-ouvertures sont formées par dépôts successifs d'une première couche mince de matériau magnétique (131), d'une couche mince en matériau isolant (132), et d'une seconde couche mince en matériau magnétique (133), ladite couche mince de matériau isolant (132) définissant la micro-ouverture entre les deux couches minces de matériau magnétique (131,133).

16. Procédé selon l'une quelconque des revendications 14 et 15 caractérisé en ce qu'on dépose une couche d'arrêt (134), avant dépôt desdits pôles en couche mince à matériau magnétique, ledit processus de dégagement d'alvéoles (140) dans ladite seconde face de la plaquette en matériau non magnétique étant mis en oeuvre jusqu'à mise à découvert de ladite couche d'arrêt chimique (134).

17. Procédé selon l'une quelconque des revendications 1 à 16 caractérisé en ce que ledit matériau non magnétique est Si ou $Al_2O_3TiC$.

18. Procédé selon l'une quelconque des revendications 2 à 4 caractérisé en ce que le matériau constitutif dudit substrat commun est le ferrite.

19. Procédé selon l'une quelconque des revendications 5 à 16 caractérisé en ce que le matériau constitutif desdits dépôts de couches magnétiques est le Sendust, feuilleté ou non.

20. Procédé selon l'une quelconque des revendications 1 à 19 caractérisé en ce qu'il est mis en oeuvre pour la réalisation simultanée collective d'une pluralité de têtes magnétiques, chacune des têtes magnétiques étant ensuite individualisée par découpage dans ladite plaquette collective (40,50).

21. Tête magnétique planaire obtenue selon le procédé de l'une quelconque des revendications 1 à 20.

## Patentansprüche

1. Verfahren zur Herstellung von Magnetköpfen mit ebener Struktur, insbesondere zum Speichern auf und zum Lesen von Magnetbändern, wobei jeder dieser Magnetköpfe von einem Typ ist, der eine Mikroöffnung enthält, die gegenüber einem zwischen zwei bewickelten Ferritkernen definierten Luftspalt zwischen zwei Magnetpolen gebildet ist, wobei das Verfahren darin besteht, daß die Dünnschicht-Magnetpole auf einer ersten Fläche eines Plättchens (40, 50) aus nichtmagnetischem Material abgelagert werden, wobei das Verfahren dadurch gekennzeichnet ist, daß es darin besteht, in der gegenüberliegenden Fläche des Plättchens wenigstens eine Wabe (45, 46; 55) als Aufnahmesitz für die bewickelten Kerne (72; 91; 111; 142, 143) in der Weise auszusparen, daß ein genau bemessener Abstand (e) für eine Kopplung zwischen dem oberen Teil eines jeden der bewickelten Kerne und den Dünnschicht-Magnetpolen erhalten wird.

2. Verfahren gemäß Anspruch 1, dadurch gekennzeichnet, daß die bewickelten Kerne wenigstens paarweise auf einem gemeinsamen Substrat (71; 90; 112) gebildet sind und vor dem gemeinsamen Einschieben in die Aufnahmesitz-Waben bewickelt werden.

3. Verfahren gemäß Anspruch 2, dadurch gekennzeichnet, daß das gemeinsame Substrat für die Bildung der bewickelten Kerne aus einem Einblock-Gegenstück (71) aus magnetischem Material wie etwa Ferrit gebildet ist.

4. Verfahren gemäß Anspruch 2, dadurch gekennzeichnet, daß das gemeinsame Substrat für die Bildung der bewickelten Kerne aus wenigstens einem Modul (112) aus magnetischem Material gebildet ist, der wenigstens ein Paar von Kernen (111) umfaßt, wobei jeder Modul (112) nach der Bewicklung der Kerne zwischen das Plättchen aus nichtmagnetischem Material und ein ebenfalls aus nichtmagnetischem Material bestehendes Halte-Gegenstück (113) eingeschoben wird.

5. Verfahren gemäß Anspruch 2, dadurch gekennzeichnet, daß der Prozeß des Bildens der Kerne darin besteht, ein nichtmagnetisches, gemeinsames Substrat (90) in der Weise zu bearbeiten, daß auf ihm Höcker (91) gebildet werden und daß dann wenigstens auf einem Teil der Oberfläche der Höcker (91) ein magnetisches Material (92) abgelagert wird.

6. Verfahren gemäß einem der Ansprüche 2 bis 5, dadurch gekennzeichnet, daß die Waben (45, 46; 55) ohne offenen Boden verwirklicht sind, wobei der genau bemessene Abstand (e) dadurch geschaffen wird, daß das gemeinsame Substrat am Boden der Waben in Anschlag gebracht wird.

7. Verfahren gemäß einem der Ansprüche 2 bis 5, dadurch gekennzeichnet, daß die Waben beliebig entweder mit oder ohne offenen Boden verwirklicht sind, wobei der genau bemessene Abstand dadurch erhalten wird, daß das gemeinsame Substrat an einer vom Boden der Waben verschiedenen Abstützplatte in Anschlag gebracht wird.

8. Verfahren gemäß Anspruch 1, dadurch gekennzeichnet, daß jede der als Aufnahmesitz für die bewickelten Kerne (142, 143) dienenden Waben (55; 140) im wesentlichen auf Höhe einer Mikroöffnung ausgespart wird, welche zwischen zwei Dünnschicht-Magnetpolen gebildet ist, und daß auf zwei symmetrischen Abschnitten der Seitenflächen der Wabe eine Schicht aus magnetischem Material (142, 143) abgelagert wird, um das Paar von der Mikroöffnung zugehörigen Kernen zu bilden.

9. Verfahren gemäß Anspruch 8, dadurch gekennzeichnet, daß die Bewicklung (145, 146) der Kerne (142, 143) um diese Seitenflächenabschnitte mit magnetischem Überzug nach dem Ausschneiden und der Individualisierung eines jeden Magnetkopfes im Plättchen ausgeführt wird.

10. Verfahren gemäß Anspruch 8, dadurch gekennzeichnet, daß die Waben (140) durch Aussparen von Polen (58, 59) in der zweiten Fläche des Plättchens (50) aus nichtmagnetischem Material verwirklicht werden, und daß die Bewicklungen (145, 146) um die Pole (58, 59) gebildet werden, welche wenigstens teilweise mit magnetischem Material überzogene Seitenflächen aufweisen.

11. Verfahren gemäß einem der Ansprüche 8 bis 10, dadurch gekennzeichnet, daß der Prozeß des Ablagerns einer Schicht aus magnetischem Material auf zwei symmetrischen Abschnitten der Seitenflächen der Wabe (140) die folgenden Stufen umfaßt:
    - Ablagern einer Abdeckschicht (141) auf dem Boden der Wabe (140);
    - Ablagern des magnetischen Materials (142, 143) auf den symmetrischen Seitenflächenabschnitten der Wabe (140);
    - Beseitigen der Abdeckschicht (141);
    - gegebenenfalls Zerbrechen der Brücke (144), die zwischen den symmetrischen Ablagerungen aus magnetischem Material (142, 143) auf den beiden symmetrischen Seitenwandabschnitten der Wabe (140) gebildet ist.

12. Verfahren gemäß einem der Ansprüche 9 und 10, dadurch gekennzeichnet, daß die Wabe (140) nach dem Vorgang der Bewicklung mit einem Umhüllungsmaterial (149) befüllt wird.

13. Verfahren gemäß einem der Ansprüche 8 bis 12, dadurch gekennzeichnet, daß eine magnetische Kopplung (147) der symmetrischen Ablagerungen (142, 143) der magnetischen Schichten verwirklicht wird.

14. Verfahren gemäß einem der Ansprüche 1 bis 13, dadurch gekennzeichnet, daß die Dünnschicht-Pole mit Mikroöffnung wenigstens teilweise in die Hohlräume (121) eingesenkt werden, die in der ersten Fläche des Plättchens (40; 50) aus nichtmagnetischem Material ausgespart sind.

15. Verfahren gemäß Anspruch 14, dadurch gekennzeichnet, daß die Dünnschicht-Pole mit Mikroöffnungen durch aufeinanderfolgende Ablagerungen einer ersten Dünnschicht aus magnetischem Material (131), einer Dünnschicht aus Isoliermaterial (132) sowie einer zweiten Dünnschicht aus magnetischem Material (133) gebildet werden, wobei die Dünnschicht aus Isoliermaterial (132) die Mikroöffnung zwischen den beiden Dünnschichten aus magnetischem Material (131, 133) definiert.

16. Verfahren gemäß einem der Ansprüche 14 und 15, dadurch gekennzeichnet, daß vor der Ablagerung der Dünnschicht-Pole mit magnetischem Material eine Stoppschicht (134) abgelagert wird, wobei der Prozeß des Aussparens der Waben (140) in der zweiten Fläche des Plättchens aus nichtmagnetischem Material bis zur Freilegung der chemischen Stoppschicht (134) ausgeführt wird.

17. Verfahren gemäß einem der Ansprüche 1 bis 16, dadurch gekennzeichnet, daß das nichtmagnetische Material Si oder $Al_2O_3TiC$ ist.

18. Verfahren gemäß einem der Ansprüche 2 bis 4, dadurch gekennzeichnet, daß das wesentliche Material des gemeinsamen Substrats Ferrit ist.

**19.** Verfahren gemäß einem der Ansprüche 5 bis 16, dadurch gekennzeichnet, daß das wesentliche Material der Ablagerungen der magnetischen Schichten laminierter oder nichtlaminierter Sendust ist.

**20.** Verfahren gemäß einem der Ansprüche 1 bis 19, dadurch gekennzeichnet, daß es für die gleichzeitige, gemeinsame Verwirklichung mehrerer Magnetköpfe ausgeführt wird, wobei jeder der Magnetköpfe anschließend durch Ausschneiden aus dem gemeinsamen Plättchen (40, 50) individualisiert wird.

**21.** Ebener Magnetkopf, der gemäß dem Verfahren gemäß einem der Ansprüche 1 bis 20 erhalten wird.

## Claims

**1.** Method of manufacturing magnetic heads having a planar structure, especially for the encoding and reading of magnetic tapes, each of the said magnetic heads being of the type comprising a micro-opening formed between two magnetic poles, facing an air gap defined between two wound ferrite cores, consisting in depositing the said magnetic poles as a thin layer on a first face of a small plate (40, 50) made of non-magnetic material, which method is characterized in that it consists in evacuating, in the opposite face of the said small plate, at least one cell (45, 46; 55) for housing the said wound cores (72; 91; 111; 142, 143), so as to obtain a calibrated spacing (e) for a junction between the upper part of each of the said wound cores and the said thin-layer magnetic poles.

**2.** Method according to Claim 1, characterized in that the said wound cores are formed, at least in pairs, on a common substrate (71; 90; 112), and are wound before collective insertion into the said housing cells.

**3.** Method according to Claim 2, characterized in that the common substrate for forming the wound cores is constituted by a monobloc backing piece (71) made of magnetic material, such as ferrite.

**4.** Method according to Claim 2, characterized in that the said common substrate for forming the wound cores is constituted by at least one module (112) made of magnetic material, including at least one pair of cores (111), each module (112) being inserted, after winding the cores, between the said small plate made of non-magnetic material and a retaining backing piece (113) likewise made of non-magnetic material.

**5.** Method according to Claim 2, characterized in that the process for forming the cores consists in machining a non-magnetic common substrate (90) so as to form pads (91) thereon, and then in depositing a magnetic material (92) on at least part of the surface of the said pads (91).

**6.** Process according to any one of Claims 2 to 5, characterized in that the said cells (45, 46; 55) are made non-emerging, the said calibrated spacing (e) being effected by bringing the said common substrate into abutment in the bottom of the cells.

**7.** Process according to any one of Claims 2 to 5, characterized in that the said cells are produced equally emerging or non-emerging, the said calibrated spacing being obtained by bringing the said common substrate into abutment on a bearing plane separate from the bottom of the cells.

**8.** Method according to Claim 1, characterized in that each of the said cells (55; 140) for housing the wound cores (142, 143) is evacuated substantially level with a micro-opening formed between two thin-layer magnetic poles, and in that a layer (142, 143) of magnetic material is deposited on two symmetrical portions of the side walls of the said cell in order to form the said pair of cores associated with the said micro-opening.

**9.** Method according to Claim 8, characterized in that the windings (145, 146) of the said cores (142, 143) around the said side wall portions having a magnetic coating are produced after cutting out and individualizing each magnetic head from the small plate.

**10.** Method according to Claim 8, characterized in that the said cells (140) are produced by evacuation of poles (58, 59) in the said second face of the small plate (50) made of non-magnetic material, and in that the windings (145, 146) are formed around the said poles (58, 59) having side walls coated, at least partially, with magnetic material.

**11.** Method according to any one of Claims 8 to 10, characterized in that the process for depositing a layer of magnetic material on two symmetrical portions of the side walls of the said cell (140) includes the following steps:

- a sparing layer (141) is deposited in the bottom of the said cell (140);
- the said magnetic material (142, 143) is deposited on the said symmetrical side wall portions of the cell (140);
- the said sparing layer (141) is removed;
- the bridge (144), formed between the said symmetrical depositions of magnetic material (142, 143) on the two symmetrical side wall portions of the cell (140) is, if required, broken.

12. Method according to either of Claims 9 and 10, characterized in that the said cell (140) is filled with an encapsulating material (149) after the winding operation.

13. Method according to any one of Claims 8 to 12, characterized in that a magnetic junction (147) is produced for the said depositions (142, 143) of symmetrical magnetic layers.

14. Method according to any one of Claims 1 to 13, characterized in that the said micro-opening thin-layer poles are immersed, at least partially, in cavities (121) made in the said first face of the small plate (40; 50) made of non-magnetic material.

15. Method according to Claim 14, characterized in that the said micro-opening thin-layer poles are formed by successive depositions of a first thin layer (131) of magnetic material, of a thin layer (132) of insulating material, and a second thin layer (133) of magnetic material, the said thin layer (132) of insulating material defining the micro-opening between the two thin layers (131, 133) of magnetic material.

16. Method according to either of Claims 14 and 15, characterized in that a stop layer (134) is deposited, before deposition of the said thin-layer poles having magnetic material, the said process for evacuating cells (140) in the said second face of the small plate made of non-magnetic material being implemented until the uncovering of the said chemical stop layer (134).

17. Method according to any one of Claims 1 to 16, characterized in that the said non-magnetic material is Si or $Al_2O_3TiC$.

18. Method according to any one of Claims 2 to 4, characterized in that the constituent material of the said common substrate is ferrite.

19. Method according to any one of Claims 5 to 16, characterized in that the constituent material of the said depositions of magnetic layers is Sendust, either laminated or not.

20. Method according to any one of Claims 1 to 19, characterized in that it is implemented for the collective simultaneous production of a plurality of magnetic heads, each of the magnetic heads being subsequently individualized by cutting out from the said collective small plate (40, 50).

21. Planar magnetic head obtained according to the method of any one of Claims 1 to 20.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

16